(19) Europäisches Patentamt
European Patent Office
Office européen des brevets

(11) **EP 4 270 053 B1**

(12) **EUROPEAN PATENT SPECIFICATION**

(45) Date of publication and mention of the grant of the patent:
**12.11.2025 Bulletin 2025/46**

(21) Application number: **21910261.3**

(22) Date of filing: **06.12.2021**

(51) International Patent Classification (IPC):
*G01S 7/497* (2006.01)   *B60S 1/56* (2006.01)
*G01S 7/48* (2006.01)   *G01S 17/42* (2006.01)
*G01S 17/931* (2020.01)   *B60S 1/48* (2006.01)

(52) Cooperative Patent Classification (CPC):
**B60S 1/56; G01S 7/4802; G01S 7/497;
G01S 17/42; G01S 17/931; B60S 1/485;**
G01S 2007/4975; G01S 2007/4977

(86) International application number:
**PCT/JP2021/044730**

(87) International publication number:
**WO 2022/138111 (30.06.2022 Gazette 2022/26)**

(54) **SENSOR SYSTEM**

SENSORSYSTEM

SYSTÈME DE CAPTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.12.2020 JP 2020217241
08.02.2021 JP 2021018193
08.02.2021 JP 2021018194**

(43) Date of publication of application:
**01.11.2023 Bulletin 2023/44**

(73) Proprietor: **KOITO MANUFACTURING CO., LTD.
Minato-ku, Tokyo, 108-8711 (JP)**

(72) Inventors:
• **NAMBA Takanori
Shizuoka-shi, Shizuoka 424-8764 (JP)**
• **SATO Masaaki
Shizuoka-shi, Shizuoka 424-8764 (JP)**
• **MOCHIZUKI Kiyotaka
Shizuoka-shi, Shizuoka 424-8764 (JP)**

(74) Representative: **Grünecker Patent- und
Rechtsanwälte
PartG mbB
Leopoldstraße 4
80802 München (DE)**

(56) References cited:
WO-A1-2016/208373   WO-A1-2019/172306
WO-A1-2020/162085   WO-A1-2020/162085
CN-A- 111 583 335   JP-A- 2019 162 915
JP-A- 2019 182 328   JP-A- 2019 526 206
US-A1- 2012 218 564   US-A1- 2019 176 841
US-A1- 2019 283 533   US-A1- 2020 159 010
US-A1- 2020 207 312

# Description

## TECHNICAL FIELD

The present disclosure relates to a sensor system.

## BACKGROUND ART

A cleaner system equipped with a cleaner is known from Patent Literature 1, and the like.

## CITATION LIST

## PATENT LITERATURE

Patent Literature 1: JP2001-171491A

US 2020/0207312 A1 discloses a vehicle cleaner system and a cleaner control unit configured to operate a plurality of cleaners depending on a signal to be input and to control all of the cleaners so as not to be operated at the same time.

WO 2020/162085 A1 teaches a vehicle cleaner system with a cleaner control unit that controls the motor pumps and solenoid valves. The cleaner control unit sets an operation stop time, for which at least one of the motor pump and the solenoid valve is stopped, and stops, based on a predetermined condition, the operation of the at least one of the motor pump and the solenoid valve for the duration of the operation stop time after the cleaning fluid is ejected to the object to be cleaned.

WO 2019/172306 A1 relates to a vehicle cleaner system capable of selecting a cleaning condition suitable for cleaning an external sensor with a cleaner unit based on a traveling speed of a vehicle.

## SUMMARY OF INVENTION

## TECHNICAL PROBLEM

The present inventors have found that when the cleaner ejects a cleaning liquid to a cleaning target, the cleaning liquid remains on the cleaning target for a certain time. For example, if it is configured to perform dirt determination even immediately after the cleaner operates, the remaining cleaning liquid may be erroneously determined as dirt, and the cleaner may be continuously actuated.

In addition, in order to detect dirt on a LiDAR, it is required that detection results be different between a clean state and a dirt attached state for a specific detection target. Therefore, the present inventors have determined that the sky is suitable as a detection target because the sky always appears in a specific area within a detection range of the LiDAR. Therefore, the present inventors have conceived of setting the sky as a detection target and determining attachment of dirt by using the fact that the detection results are different between the clean state and the dirt attached state.

However, in the LiDAR mounted on a vehicle, the landscape within the detection range of the LiDAR changes in various ways while the vehicle is traveling. The present inventors have found that, when the landscape within the detection range changes in various ways, it is difficult to always determine the attachment of dirt if it is configured to determine the attachment of dirt only to a specific detection target. For example, the sky is suitable as a detection target as described above, but the sky does not appear when traveling in a tunnel. Therefore, it is difficult to perform the determination of dirt attachment only by relying on the sky.

In addition, while the vehicle is traveling, the landscape within the detection range of the LiDAR changes. However, if dirt is attached to a transmissive part of the LiDAR, the landscape of the portion to which the dirt is attached does not change. It is conceivable to detect dirt by using such a difference. However, since the landscape does not change when the vehicle is stopped, the attachment of dirt cannot be determined by such a method.

One of the objects of the present disclosure is to provide a sensor system that is unlikely to cause erroneous determination of dirt.

One of the objects of the present disclosure is to provide a sensor system capable of detecting dirt, which is not limited to a specific detection target.

One object of the present disclosure is to provide a sensor system capable of detecting attachment of dirt when a vehicle is stopped.

## SOLUTION TO PROBLEM

According to the invention, a sensor system according to claim 1 is provided.

A sensor system according to a first example not belonging to the invention is a sensor system including:

a distance detection device including a light emitting unit configured to emit light to a detection range via a transmissive part configured to transmit light, a light receiving unit configured to receive light emitted from the light emitting unit and reflected by hitting at an object, and a point group information output unit configured to output point group information including position information on the object, distance information to the object, and a reflection intensity from the object, based on the light received by the light receiving unit;

a target recognizing unit configured to recognize a target and to output target position information that is position information on the target, and

a dirt determining unit configured to detect dirt attached to the transmissive part, based on the point group information and the target position information,

in which the dirt determining unit is configured:

> to specify, as a predicted position, position information on the target after a first time has elapsed, based on a movement history of the target at a first time point, and
> to determine that dirt is attached to a position of the transmissive part corresponding to the predicted position when the reflection intensity at the predicted position acquired after the first time has elapsed from the first time point is different from the reflection intensity of the target at the first time point.

A sensor system according to a second example not belonging to the invention is a sensor system mounted on a vehicle and including:

> a distance detection device mounted on the vehicle and including a light emitting unit configured to emit light to a detection range via a transmissive part configured to transmit light, a light receiving unit configured to receive light emitted from the light emitting unit and reflected by hitting at an object, and a point group information output unit configured to output point group information including position information on the object, distance information to the object, and a reflection intensity from the object, based on the light received by the light receiving unit; and
> a dirt determining unit configured to detect dirt attached to the transmissive part, based on vehicle speed information output from the vehicle and the point group information,
> in which the dirt determining unit is configured:
>
>> to specify, as a high-reflection point group, a point group whose reflection intensity is higher than a predetermined intensity and whose position information is moving in synchronization with the vehicle speed information,
>> to calculate a planned course through which the high-reflection point group will pass and a predicted reflection intensity when the high-reflection point group will pass through the planned course, based on the reflection intensity and position information on the high-reflection point group,
>> to compare the predicted reflection intensity with the reflection intensity obtained from the point group information output unit when the object has passed the planned course, and
>> to determine that dirt is attached on the planned course when the reflection intensity is different from the predicted reflection intensity.

A sensor system according to a third example not belonging to the invention is a sensor system including:

> a distance detection device fixed to an installation mounted on the ground and including a light emitting unit configured to emit light to a detection range via a transmissive part configured to transmit light, a light receiving unit configured to receive light emitted from the light emitting unit and reflected by hitting at an object, and a point group information output unit configured to output point group information including position information on the object, distance information to the object, and a reflection intensity from the object, based on the light received by the light receiving unit; and
> a dirt determining unit configured to detect dirt attached to the transmissive part, based on the point group information,
> in which the dirt determining unit is configured:
>
>> to specify, as a point group to be determined, a point group whose variation in the reflection intensity is equal to or less than a predetermined value over a first predetermined time from a first time point to a second time point, and
>> to determine that dirt is attached to a position corresponding to the point group to be determined when a state in which the reflection intensity of the point group to be determined is lower than a reference value determined based on the reflection intensity of the point group to be determined in the first predetermined time continues for a second predetermined time or longer.

A sensor system according to a fourth example not belonging to the invention is a sensor system mounted on a vehicle and including:

> a distance detection device mounted on the vehicle and including a light emitting unit configured to emit light to a detection range via a transmissive part configured to transmit light, a light receiving unit configured to receive light emitted from the light emitting unit and reflected by hitting at an object, and a point group information output unit configured to output point group information including position information on the object and distance information to the object, based on the light received by the light receiving unit;
> a dirt determining unit configured to detect dirt attached to the transmissive part, based on the point group information; and
> a reference information recording unit configured to record reference information, which is point group information obtained at a specific location,
> in which the dirt determining unit is configured:
>
>> to acquire, from the vehicle, a stop signal indicating that the vehicle is stopped;

to determine that the vehicle is in the specific location, based on distance information relating to the reference information and distance information relating to stop time point group information acquired during acquisition of the stop signal, and

to determine that dirt is attached when there is a difference between the distance information relating to the stop time point group information and the distance information relating to the reference information.

BRIEF DESCRIPTION OF DRAWINGS

FIG. 1 is a system block diagram of a sensor system according to a first embodiment of the present disclosure.
FIG. 2 is a cross-sectional view of a LiDAR.
FIG. 3 is a system block diagram of a sensor system according to a first example not belonging to the invention.
FIG. 4 is a schematic diagram for illustrating determination of dirt attachment in the first example.
FIG. 5 is a schematic diagram for illustrating determination of dirt attachment in a second example not belonging to the invention.
FIG. 6 shows a landscape within a detection range of a LiDAR fixed to an installation installed on the ground in a third example not belonging to the invention.
FIG. 7 is a view showing transition of a reflection intensity of a certain point on a guide board.
FIG. 8 is a system block diagram of a sensor system according to a fourth example not belonging to the invention.
FIG. 9 is a flow chart of dirt attachment determination that is performed by the sensor system.
FIG. 10 shows a landscape within the detection range of the LiDAR when acquiring reference information.
FIG. 11 shows a landscape within the detection range of the LiDAR when dirt determination is performed.

DESCRIPTION OF EMBODIMENTS AND EXAMPLES

Hereinafter, embodiments of the present disclosure and examples not belonging to the invention will be described with reference to the drawings. Note that, for convenience of description, the description of members having the same reference numerals as the members already described in the description of the embodiments will be omitted. In addition, for convenience of description, the dimension of each member shown in the drawings may be different from the dimension of each actual member.

In addition, in the description of the present embodiment, for convenience of description, "left and right direction", "front and rear direction", and "upper and lower direction" are appropriately referred to. These directions are relative directions set with respect to the vehicle. Here, "upper and lower direction" is a direction including "upper direction" and "lower direction". "Front and rear direction" is a direction including "front direction" and "rear direction". The "left and right direction" is a direction including "left direction" and "right direction".

<First Embodiment>

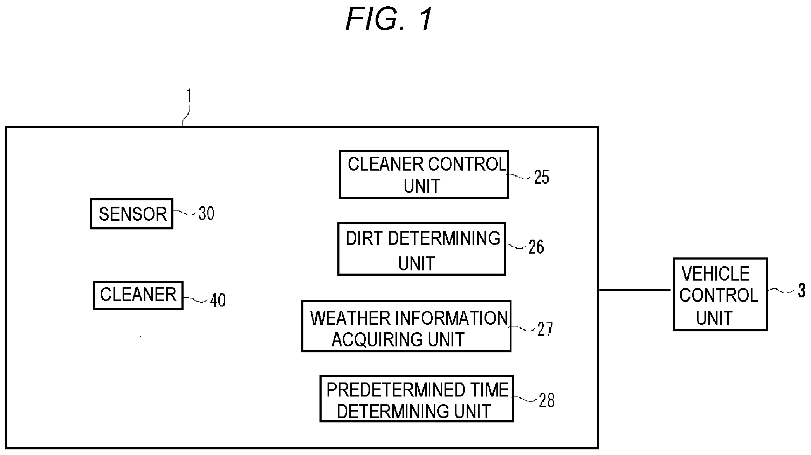

FIG. 1 is a system block diagram of a sensor system 1 according to a first embodiment of the present disclosure. As shown in FIG. 1, the sensor system 1 includes a sensor 30, a cleaner 40 and a cleaner control unit 25. The sensor 30 is a sensor capable of acquiring external information. The sensor 30 is, for example, a camera, a radar, a LiDAR, a gating camera, or the like. Hereafter, the sensor system 1 mounted on a vehicle having a vehicle control unit 3 will be described.

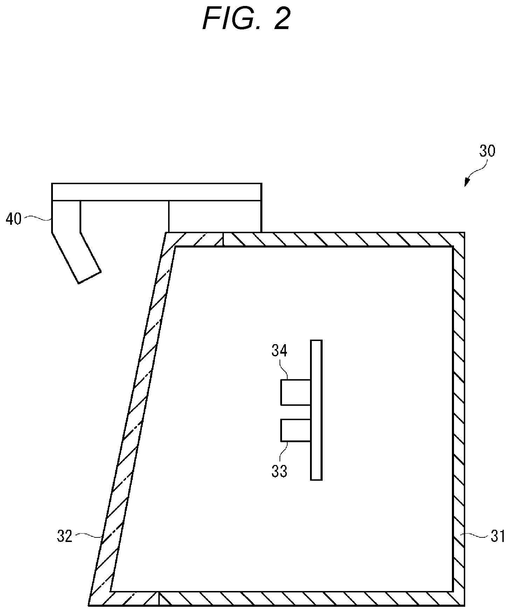

FIG. 2 is a cross-sectional view of a LiDAR (Light Detection and Ranging or Laser Imaging Detection and Ranging), which is an example of the sensor 30. As shown in FIG. 2, the LiDAR 30 has a housing 31 having an opening and an outer lens 32 covering the opening of the housing 31. In a space formed by the housing 31 and the outer lens 32, a light emitting unit 33 and a light receiving unit 34 are provided. The light receiving unit 34 detects light emitted from the light emitting unit 33 and reflected by a detection target. At this time, the light receiving unit 34 receives reflected light from the detection target via the outer lens 32 (transmissive part). The light receiving unit 34 outputs detection information corresponding to the detected light.

In addition, the sensor system 1 includes the cleaner 40 that cleans the LiDAR 30. The cleaner 40 ejects cleaning liquid onto the outer lens 32 to remove dirt such as mud or dust attached to the outer lens 32. As the cleaning liquid, water, water including a cleaning component, or the like can be used.

Returning to FIG. 1, the cleaner control unit 25 transmits a drive signal to the cleaner 40 to actuate the cleaner 40. Alternatively, the cleaner control unit 25 transmits a stop signal to the cleaner 40 to stop actuation of the cleaner 40.

In the present embodiment, the cleaner control unit 25 is configured not to actuate the cleaner 40 within a predetermined time after the drive of the cleaner 40 is complete. The description 'drive of the cleaner 40 is complete' means when the cleaner control unit 25 transmits a stop signal to the cleaner 40, when the cleaner control unit 25 acquires a signal indicating that the drive has stopped from the cleaner 40, when the cleaner control unit 25 stops supply of power for actuating the cleaner 40, after a certain period of time has elapsed since the drive signal is transmitted to the cleaner 40, or the like.

The present inventors have studied in detail the cleaning manner by the cleaner 40. At first, the present inventors assumed that when the vehicle was running, the cleaning liquid would be quickly removed by the traveling wind, but found that this was not the case. It has been found that when the cleaner 40 ejects the cleaning liquid to a cleaning target, the cleaning liquid remains on the cleaning target for a certain time. The present inventors have confirmed that the cleaning liquid remains for about 1 to 10 seconds even when the vehicle is traveling at a high speed of 60 km/h or higher.

For this reason, for example, when the cleaner control unit 25 is configured to actuate the cleaner 40 if an abnormality occurs in an output of the sensor 30, the cleaning liquid remains on the outer lens 32 immediately after the cleaner 40 is actuated, so that an error may occur in the output of the sensor 30. As a result, once the cleaner 40 is actuated, the cleaner control unit 25 actuates the cleaner 40 based on an abnormality in the output of the sensor 30, so that the cleaner 40 may be continuously actuated.

Even in such a case, according to the sensor system 1 of the present embodiment, the cleaner 40 is not actuated within a predetermined time after the drive of the cleaner 40 is complete. For this reason, wasteful consumption of the cleaning liquid is suppressed.

In addition, the sensor system 1 of the present embodiment is compatible with the sensor system 1 that includes a dirt determining unit 26 (refer to FIG. 1) that determines whether dirt is attached to the outer lens 32, according to an output of the sensor 30, and in which the cleaner control unit 25 actuates the cleaner 40, in response to an output of the dirt determination unit 25. Unlike the present embodiment, if the actuation of the cleaner 40 is permitted even immediately after the drive of the cleaner 40 is complete, an abnormality occurs in the output of the sensor 30 due to the remaining cleaning liquid. For this reason, the dirt determining unit 26 determines that dirt is generated over a predetermined time immediately after the drive of the cleaner 40 is complete, and the cleaner control unit 25 continues to actuate the cleaner 40 beyond an originally planned actuation time.

According to the sensor system 1 of the present embodiment, however, since the cleaner 40 is not actuated within a predetermined time after the drive of the cleaner 40 is complete, the cleaner 40 can be actuated only for the originally planned actuation time.

In addition, the sensor system 1 of the present embodiment may include:

a dirt determining unit 26 that determines whether dirt is attached to the outer lens 32 (transmissive part), based on detection information of the sensor 30, and
the cleaner control unit 25 may be configured not to input the detection information of the sensor 30 to the dirt determining unit 26 within a predetermined time after the drive of the cleaner 40 is complete.

In addition, the sensor system 1 of the present embodiment may include:

a dirt determining unit 26 that determines whether dirt is attached to the outer lens 32, based on detection information of the sensor 30, and
the cleaner control unit 25 may be configured not to allow the dirt determining unit 26 to perform dirt determination within a predetermined time after the drive of the cleaner 40 is complete.

In addition, the sensor system 1 of the present embodiment may include:

a dirt determining unit 26 that determines whether dirt is attached to the outer lens 32, based on detection information of the sensor 30, and
the cleaner control unit 25 may be configured not to allow the dirt determining unit 26 to output a result of dirt determination within a predetermined time after the drive of the cleaner 40 is complete.

In addition, the sensor system 1 of the present embodiment may include:

a dirt determining unit 26 that determines whether dirt is attached to the outer lens 32, based on detection information of the sensor 30,
the cleaner control unit 25 may be configured to actuate the cleaner 40 based on an output of the dirt determining unit 26, and
the cleaner control unit 25 may be configured not to actuate the cleaner 40 regardless of an output of the dirt determining unit 26 within a predetermined time after the drive of the cleaner 40 is complete.

Note that, as shown in FIG. 1, the sensor system 1 includes a weather information acquiring unit 27 that outputs weather information including at least one of temperature, humidity, or air pressure, and a predetermined time determining unit 28 configured to determine a predetermined time during which the cleaner 40 is not actuated, based on the weather information.

A time during which the cleaning liquid remains on the outer lens 32 is affected by a weather condition such as temperature, humidity, and atmospheric temperature, in addition to a vehicle speed. For example, a dry state or a high-temperature state tends to shorten the remaining time. In addition, a rainy state, a high-humidity state or a low-temperature state tends to lengthen the remaining time. Therefore, with a configuration of calculating the predetermined time during which the cleaner 40 is not actuated, according to the weather information, it is possible to set the predetermined time to a time suitable for the weather at that time.

In addition, the predetermined time determining unit 28 may determine the predetermined time according to a latitude of a current position. For example, the latitude of the current position can be specified based on GPS information. The closer to the equator and the lower the latitude is, the more difficult it is for the cleaning liquid to remain, so the predetermined time can be set shorter.

Further, as described above, the predetermined time determining unit 28 may be configured to determine the predetermined time according to a traveling speed of the vehicle acquired from the vehicle control unit 3. Alternatively, the predetermined time may be a fixed value, regardless of the vehicle speed, the weather information, the latitude, and the like.

Further, in the sensor system 1 of the present embodiment, the cleaner control unit 25 is preferably configured to allow actuation of the cleaner 40 when a signal, which indicates that the vehicle is stopped, is acquired from the vehicle control unit 3. While the cleaner 40 is actuated to eject the cleaning liquid, the sensor 30 cannot perform normal detection. For this reason, it is preferable to actuate the cleaner 40 while the vehicle is stopped. In addition, since the traveling wind does not act while the vehicle is stopped, the cleaning liquid is likely to remain on the outer lens 32. However, according to the sensor system 1 of the present embodiment, the cleaner 40 is not actuated for a predetermined time during which the cleaning liquid remains, so the wasteful consumption of the cleaning liquid can be suppressed.

Note that, in the present embodiment, the example in which the sensor system 1 is mounted on the vehicle has been described, but the present disclosure is not limited thereto.

The present disclosure may also be applied to the sensor system 1 having a sensor attached to an installation installed on the ground, such as a traffic light or a streetlamp, and configured to acquire traffic information such as the speed and number of vehicles passing through the location.

In addition, in the present embodiment, the example in which the external sensor is a LiDAR has been described, but the present disclosure is not limited thereto. The external sensor may also be a camera or a millimeter wave radar.

<First example>

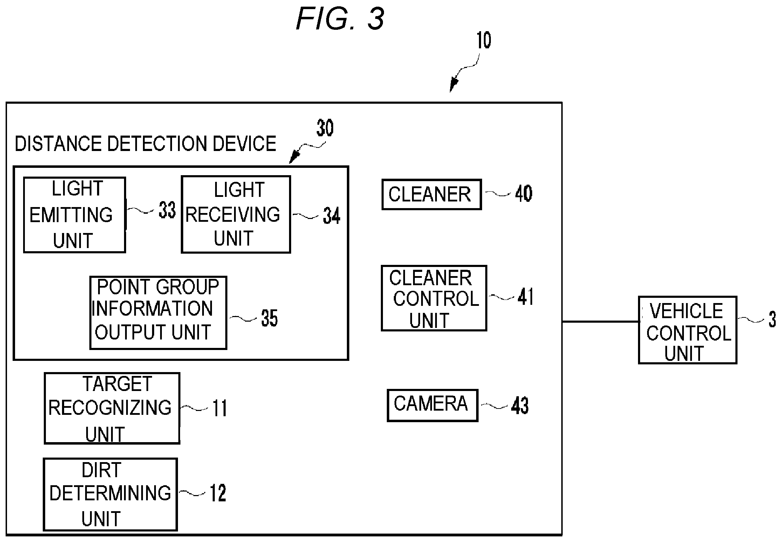

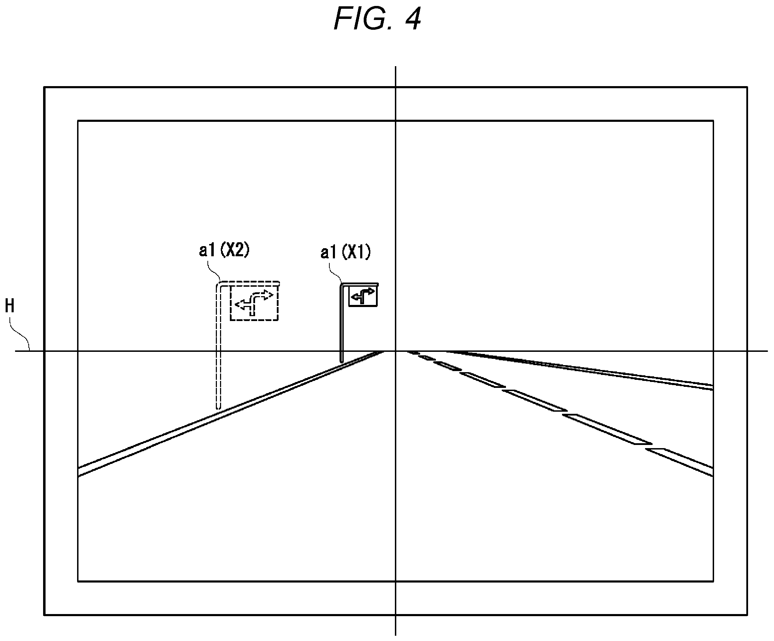

Next, a sensor system 10 according to a first example not belonging to the invention will be described with reference to FIGS. 3 and 4. FIG. 3 is a system block diagram of a sensor system 10 according to a first example. The sensor system 10 of the first example is mounted on a vehicle having a vehicle control unit 3. As shown in FIG. 3, the sensor system 10 includes a LiDAR 30 (an example of the sensor) and a dirt determining unit 12. The LiDAR 30 is a sensor that can acquire external information.

As shown in FIG. 2, the LiDAR 30 has a housing 31 having an opening and an outer lens 32 covering the opening of the housing 31. In a space formed by the housing 31 and the outer lens 32, a light emitting unit 33 and a light receiving unit 34 are provided. The light receiving unit 34 detects light emitted from the light emitting unit 33 and reflected by a detection target. At this time, the light receiving unit 34 receives reflected light from the detection target via the outer lens 32 (an example of the transmissive part). The light receiving unit 34 outputs detection information corresponding to the detected light.

The light emitting unit 33 emits light within a detection area (predetermined range) defined ahead of the LiDAR 30. The light emitting unit 33 sequentially emits light toward a plurality of points within the detection area. Light emitted from the light emitting unit 33 and reflected by an object within the detection area passes through the outer lens 32 and is incident onto the light receiving unit 34. The light receiving unit 34 outputs a detection result corresponding to detection of the reflected light to a point group information output unit 35.

The point group information output unit 35 (refer to FIG. 3) outputs point group information including position information, distance information, and reflection intensity information with respect to a plurality of points within the detection area.

The position information is information indicating at which point (called a detection point) in the detection area the light emitted from the light emitting unit 33 and reflected toward the light receiving unit 34 was reflected, i.e., a position of the detection point.

For example, it is assumed that the detection area is previously divided into a matrix shape of $10000 \times 10000$, or the like, the light emitting unit 33 is configured to emit light to points within the divided areas, and the light emitting unit 33 is configured to emit sequentially light from a point located on the right upper side of the plurality of points toward a point located on the left lower side. In this case, the order in which the light was received includes position information about which point the light was emitted toward. In this case, the point group information output unit 35 sequentially outputs a pair of information consisting of distance information and reflection intensity information, and the order of outputting these pieces of information becomes position information.

Alternatively, a configuration may be possible in which the light emitting unit 33 includes a light source and a mirror capable of changing a direction, and a direction in which the light emitting unit 33 emits light can be specified by a direction of the mirror. In this case, a direction in which the light reflected by the mirror travels becomes position information. The position information in this case can express the direction in which the light travels by a horizontal angle and a vertical angle. The point group information output unit 35 outputs point group information consisting of position information on a detection point based on a direction of the mirror of the light emitting unit 33, distance information, and reflection intensity information.

The distance information is information indicating a distance between the light receiving unit 34 and an object present at the detection point. The distance information is calculated based on a light flux and a time or phase after the light emitting unit 33 emits light toward the detection point until the light receiving unit 34 receives reflected light from the detection point.

The reflection intensity information is information indicating the intensity of light when the light receiving unit 34 receives reflected light from this detection point.

The dirt determining unit 12 detects dirt attached to the outer lens 32 based on the point group information including the position information, distance information, and reflection intensity information. A dirt determination method by the dirt determining unit 12 will be described with reference to FIG. 4.

FIG. 4 is a schematic view for illustrating determination of dirt attachment in the first example. FIG. 4 shows a landscape within the detection range of the LiDAR 30. In FIG. 4, there is a guide board (an example of the target) of a highway. In FIG. 4, the guide board visible at a first time point t1 is indicated by a solid line, and a predicted position of the guide board at a second time point t2 is indicated by a broken line.

First, a target recognizing unit 11 specifies a target from an output of the point group information output unit 35, based on a predetermined condition at a time point t0. The predetermined condition is, for example, an area having a reflection intensity equal to or higher than a predetermined intensity, which is recognized as a target. Alternatively, an area in which the number of detection points having a reflection intensity equal to or higher than a predetermined intensity is equal to or larger than a predetermined number is recognized as a target. The predetermined condition can be set to any condition that can specify a target, based on the output of the point group information output unit 35. The target recognizing unit 11 outputs a position of the target to the dirt determining unit 12, as target position information. When a target is specified, the target recognizing unit 11 continuously traces the target and outputs the position information thereon to the dirt determining unit 12, together with time point information.

The dirt determining unit 12 acquires, from the point group information output unit 35, reflection information at an arbitrary point a1 of the target at a first time point t1 after a predetermined time T0 has elapsed from the time point t0. For example, it is assumed that the reflection intensity information at the point a1 at the first time point t1 is A1.

Next, the dirt determining unit 12 specifies, at the first time point t1 after the predetermined time T0 has elapsed from the time point t0, position information on the target at a second time point t2 after a first time point T1 has elapsed from the first time point t1, as a predicted position, based on a movement history of the target. For example, when a position of the point a1 in the target at the time point t0 is X0 and the point a1 in the target at the first time point t1 moves to a position X1, a position X2 within the detection range of the point a1 in the target at the second time point t2 can be calculated as follows. Note that a position Xn is actually values of x and y when the detection range is expressed by X and y coordinates, or values of $\theta$ and $\varphi$ when the detection range is expressed by a vertical angle $\theta$ and a horizontal angle $\varphi$.

$$X2=X1+(X1-X0)/T0 \times T1$$

Next, the dirt determining unit 12 acquires reflection intensity information A2 at the position X2 at the second time point t2 from the point group information output unit 35, and compares the reflection intensity information A2 with reflection intensity information A1 at the position X1 at the first time point t1. For example, the dirt determining unit 12 determines that dirt is attached to a position of the outer lens 32 corresponding to the predicted position X2 when an absolute value |A2-A1| of a difference between the reflection intensity information A1 and A2 is equal to or greater than a predetermined value. Alternatively, the dirt determining unit 12 determines that dirt is attached to the position of the outer lens 32 corresponding to the predicted position X2 when |1-A2/A1|, which is an absolute value obtained by subtracting a ratio of the reflection intensity information A1 and A2 from 1, is equal to or greater than a predetermined value.

When the outer lens 32 is in a clean state, the reflection intensity information at the first time point t1 and the second time point t2 will not differ greatly because the LiDAR 30 measures the reflected light from the same target. However, when dirt is attached to the outer lens 32, the light emitted from the light emitting unit 33 of the LiDAR 30 is reflected by the dirt present nearby. In addition, since dirt attached to the outer lens 32 is present in the vicinity of the light receiving unit 34, as compared with the target present outside the vehicle, the intensity of the reflected light is also increased. For this reason, when the dirt is attached to the outer lens 32, the reflection intensity information becomes remarkably larger, as compared with a case in which the dirt is not attached.

Therefore, in the first example, when the actual reflection intensity at the predicted position X2 is greater than the reflection intensity expected at the predicted position X2 (about the same level as the reflection intensity at the position X1), it is determined that dirt is attached to the position of the outer lens 32 corresponding to the predicted position X2.

Note that, more strictly, since the vehicle is traveling, a distance between the target and the LiDAR 30 decreases over time, in many cases. For this reason, the reflection intensity information A2 tends to be a larger value than the reflection intensity information A1. However, since a difference between the reflection intensity when there is no dirt and the reflection intensity when there is dirt is much greater than an increase in the reflection intensity due to the distance being shortened by the vehicle traveling, even when the vehicle is traveling, it does not interfere with the above-described dirt determination method.

In this way, according to the sensor system 10 of the first example, even when the landscape within the detection range changes, it is possible to determine attachment of dirt by comparing the reflection intensity of the target at the first time point t1 and the reflection intensity at the predicted position at the second time point t2. According to the sensor system 10 of the first example, since the positions of all kinds of targets can be predicted based on the movement history, all kinds of targets can be used to determine attachment of dirt, and there is no need to determine attachment of dirt only to a specific target object. Note that, regarding the movement history of the target, the target itself does not have to be moving. The movement history of the target may also be a movement history within the detection range when the target moves relative to the LiDAR as the vehicle on which the LiDAR 30 is mounted travels.

Note that the target recognizing unit 11 is preferably configured to recognize that a target is present in an area where the reflection intensity is equal to or greater than a predetermined intensity.

Since the reflection intensity information is more stable as the reflection intensity is stronger, the determination of dirt can be stably performed. In addition, since a metal surface or a road surface with high reflection intensity is a hard object, the target itself is unlikely to change over time, and is thus suitable for determination of dirt.

The target recognizing unit 11 is preferably configured to recognize that a target is present in an area where the reflection intensity is equal to or greater than a predetermined intensity, in an area where the vertical angle is 0 degree or greater within the detection range of the LiDAR 30.

The area where the vertical angle is 0 degree or greater is located above the horizon. Above the horizon, there are many targets suitable for determination of dirt, such as a metal signboard and a guide board. In addition, since the sky exists behind these targets, the difference in reflection intensity between the sky and a target is large, so the target recognizing unit 11 can easily specify an outline of the target.

Note that, as shown in FIG. 3, the sensor system 10 may include a camera 43 whose angle of view includes the detection range of the LiDAR 30, and the target recognizing unit 11 may be configured to specify a target and target position information, based on an image acquired from the camera 43.

For example, the target recognizing unit 11 may specify a target such as a signboard, a guide board, or a large truck, and specify target position information, based on the image acquired by the camera 43.

The camera 43 can specify a target even when the target is not a target with high reflectance, such as cloth. Thereby, even a target with low reflectance can be used for determination of dirt attachment.

Note that, in the above description, it is assumed that the point at the second time point t2 is calculated by linear approximation, but the present disclosure is not limited thereto. The position of the point a1 may be acquired twice or more, and the point at the second time point t2 may be calculated based on the acquired positions. Alternatively, since the movement of a point in the area is regular when the vehicle is traveling, the point at the second time point may be calculated based on the regularity and the vehicle speed.

In addition, the sensor system 10 includes the cleaner 40 that cleans the LiDAR 30. The cleaner 40 ejects the cleaning liquid onto the outer lens 32 to remove dirt such as mud and dust attached to the outer lens 32. As the cleaning liquid, water, water including a cleaning component, or the like can be used.

Further, in the sensor system 10 of the first example, the cleaner control unit 41 is preferably configured to allow actuation of the cleaner 40 when a signal, which indicates that the vehicle is stopped, is acquired from the vehicle control unit 3. While the cleaner 40 is actuated to eject the cleaning liquid, the LiDAR 30 cannot perform normal detection. For this reason, it is preferable to actuate the cleaner 40 while the vehicle is stopped. In addition, since the traveling wind does not act while the vehicle is stopped, the cleaning liquid is likely to remain on the outer lens 32. However, according to the sensor system 10 of the first example, the cleaner 40 is not actuated for a predetermined time during which the cleaning liquid remains, so the wasteful consumption of the cleaning liquid can be suppressed.

<Second example>

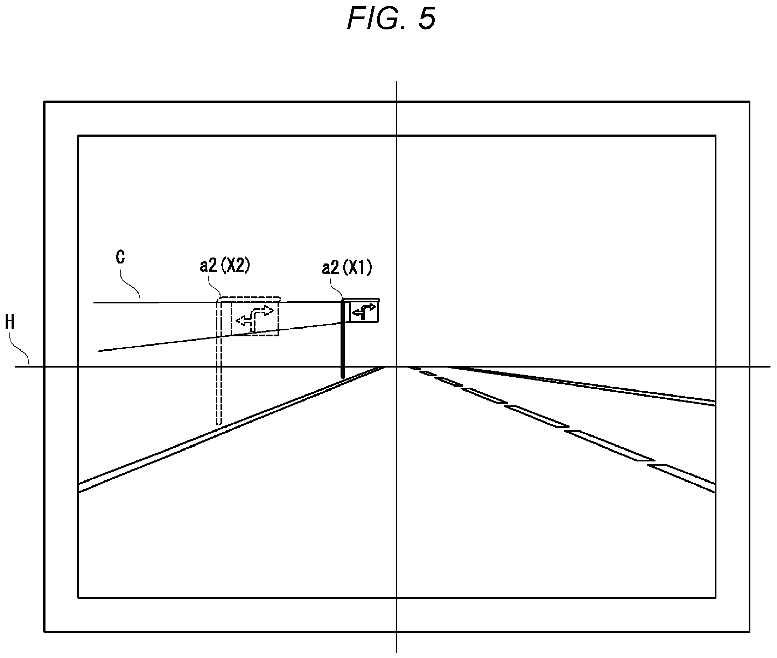

Note that the dirt determining unit 12 of the sensor system 10 mounted on the vehicle may be configured as follows. The dirt determination method of the sensor system 10 according to a second example not belonging to the invention will be described with reference to FIG. 5. FIG. 5 is a schematic diagram for illustrating the determination of dirt attachment in the second example. In FIG. 5, a reference sign C indicates a planned course of the guide board. Note that the block diagram of the sensor system 10 of the second example is similar to that of the first example.

First, the dirt determining unit 12 acquires reflection intensity information from the point group information output unit, and specifies a point group whose reflection intensity is higher than a predetermined intensity and whose position information is moving in synchronization with the vehicle speed information, as a high-reflection point group. For example, a point group having a high reflectance and moving in synchronization with the vehicle speed information, such as a metal signboard, a guide board, or a road surface, is specified as a high-reflection point group. The description 'in synchronization with the vehicle speed information' does not mean only moving at the same speed as the vehicle speed. For example, a distance between a guide board fixed at a position far from a host vehicle and the host vehicle decreases in synchronization with the vehicle speed as the host vehicle approaches. However, a distance from an oncoming vehicle traveling at a constant speed (vehicle speed V2) decreases in synchronization with a speed obtained by summing a vehicle speed V1 of the host vehicle and the vehicle speed V2 of the oncoming vehicle. Even this case is also referred to as 'in synchronization with the vehicle speed information'.

In the example shown in FIG. 5, the dirt determining unit 12 specifies the guide board on the highway as a high-reflection point group.

Next, the dirt determining unit 12 calculates a planned course through which the high-reflection point group will pass and a predicted reflection intensity when the high-reflection point group will pass through the planned course, based on the reflection intensity and position information on the high-reflection point group. The dirt determining unit 12 specifies a planned course through which the high-reflection point group will pass, based on the movement history of the guide board. By a method similar to that of the first example described above, the planned course through which the high-reflection point group will pass can be specified.

For example, a time point after the predetermined time T0 has elapsed from the time point t0 is referred to as a time point t1. When a position of a point a2 of the target at the time point t0 is denoted as X0 and a position of a point a2 of the target at the time point t1 is denoted as X1, a position X of the point a2 at a time point t after the predetermined time T has elapsed from the time point t1 can be calculated by the following equation.

$$X=X1+(X1-X0)/T0 \times T$$

Next, the dirt determining unit 12 calculates a predicted reflection intensity when passing through the planned course, based on the reflection intensity information on the high-reflection point group. For example, similar to the first example described above, the reflection intensity information A0 at the time point t0 at which the guide board is specified as the high-reflection point group may be used as the predicted reflection intensity when passing through the planned course.

Alternatively, the predicted reflection intensity A2 of the point a2 at the time point t2 after a predetermined time T2 has lapsed from the time point t1 may be calculated by the following equation using linear approximation.

$$A2=A1+(A1-A0)/T0 \times T2$$

Alternatively, since a distance from the point a2 decreases by vehicle speed V x time T when the time T elapses, the predicted reflection intensity A may be calculated from the following equation using an attenuation rate α of detection light in the air.

$$A2=A1+\alpha \times V \times T$$

Next, at the time point t2 after the predetermined time T2 has elapsed from the time point t1, the dirt determining unit 12 acquires actual reflection intensity A2' obtained from the point group information output unit 35 when the object passes through the planned course. The dirt determining unit 12 compares the actual reflection intensity A2' with the predicted reflection intensity A2, and determines that dirt is attached on the planned course when the actual reflection intensity A2' is different from the predicted reflection intensity A2.

When the outer lens 32 is in a clean state, the reflection intensity information at the first time point t1 and the second time point t2 will not differ greatly because the LiDAR 30 measures the reflected light from the same target. However, when dirt is attached to the outer lens 32, the light emitted from the light emitting unit 33 of the LiDAR 30 is reflected by the dirt present nearby. In addition, since dirt attached to the outer lens 32 is present in the vicinity of the light receiving unit 34, as compared with the target present outside the vehicle, the intensity of the reflected light is also increased. For this reason, when the dirt is attached to the outer lens 32, the reflection intensity information becomes remarkably larger, as compared with a case in which the dirt is not attached.

Therefore, in the second example, when the actual reflection intensity A2' is greater than the predicted reflection intensity A2, it is determined that dirt is attached to the position of the outer lens 32 corresponding to the planned course.

In this way, even when the landscape within the detection range changes, the sensor system 10 according to the second example can also determine attachment of dirt by comparing the predicted reflection intensity A2 and the actual reflection intensity A2' when the target passes through the planned course. According to the sensor system 10 of the present embodiment, since the planned course of all kinds of targets can be predicted based on the movement history, all kinds of targets can be used to determine attachment of dirt, and there is no need to determine attachment of dirt only to a specific target object.

<Third example>

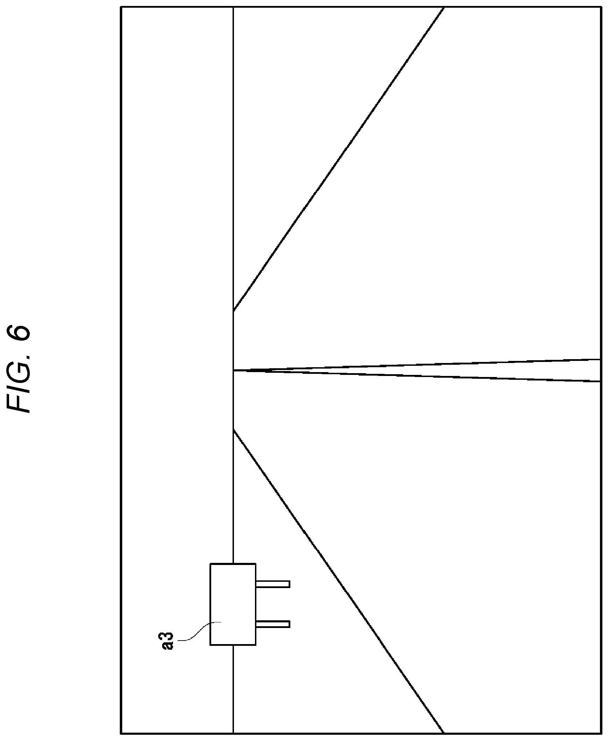

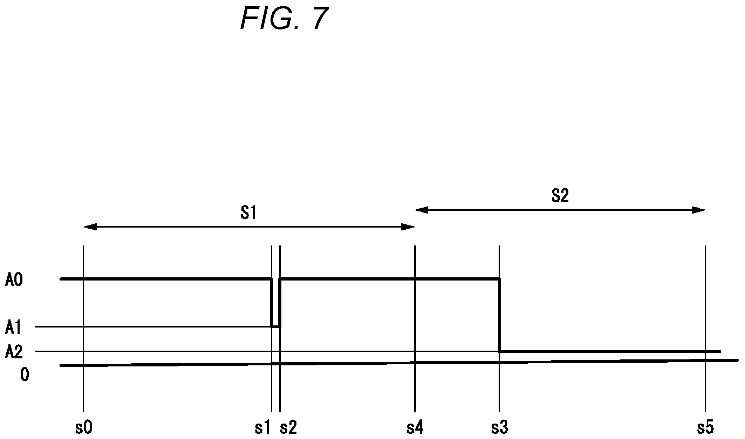

Note that, in the above-described first and second examples, the example in which the LiDAR 30 is mounted on a moving vehicle has been described, but the present disclosure is not limited thereto. The fourth example not belonging to the invention can also be applied to the sensor system 10 including the LiDAR 30 fixed to an installation installed on the ground. For example, the present disclosure can be applied to the sensor system 10 having the LiDAR 30 that is attached to an installation installed on the ground, such as a traffic light or a streetlamp, and acquires traffic information such as the speed and number of vehicles passing through the location. The operation of the dirt determining unit 12 in the third example will be described with reference to FIGS. 6 and 7. Note that the block diagram of the sensor system 10 of the third example is also similar to that of the first example.

FIG. 6 shows a landscape within the detection range of the LiDAR 30 fixed to the installation installed on the ground.

First, on the basis of the reflection intensity information acquired from the point group information output unit 35, the dirt determining unit 12 specifies a point group whose variation in the reflection intensity is equal to or less than a predetermined value over a first predetermined time S1 from the first time point t1 to the second time point t2, as a point group to be determined.

The description 'variation in the reflection intensity is equal to or less than a predetermined value' indicates, for example, a case in which an average value of the reflection intensity within the first predetermined time S1 is equal to or greater than a predetermined value, such as 80% or greater of the maximum value within the first predetermined time S1. Alternatively, it indicates a case in which a ratio of the maximum value to the minimum value of the reflection intensity within the first predetermined time S1 is equal to or greater than a predetermined value, such as 80% or greater.

A point group that does not move with respect to the ground such as a guide board on a highway, a signboard at a store, a roof of a house, or a road surface and has a stable reflection intensity can be specified as a point group to be determined. Alternatively, a point group such as a body of a truck that does not move, albeit temporarily, with respect to the ground over the first predetermined time S1 and has a stable reflection intensity may be specified as a reflection point group to be determined. Alternatively, the sky can also be specified as a point group to be determined because the sky is also stably low in reflection intensity. In FIG. 6, the guide board on the highway is specified as a point group to be determined.

Next, the dirt determining unit 12 determines that dirt is attached to a position corresponding to the point group to be determined when a state in which the reflection intensity of the point group to be determined is lower than a reference value determined based on the reflection intensity of the point group to be determined in the first predetermined time S1 continues for a second predetermined time or longer. For example, a guide board exhibiting strong reflection intensity B1 over one hour will maintain the similar reflection intensity B1 even thereafter. However, when dust is attached to the outer lens 32 thereafter, the reflection intensity B2 after a time point of the attachment continues to be lower than the reflection intensity B1. Therefore, in this case, the dirt determining unit 12 can determine that dirt is attached to the outer lens 32.

Note that the reference value determined based on the reflection intensity of the point group to be determined in the first predetermined time S may be an average value or a maximum value of the reflection intensity of the point group to be determined in the first predetermined time S. Alternatively, the reference value may be a value calculated by multiplying the average value or maximum value of the reflection intensity of the point group to be determined in the first predetermined time S by a coefficient such as 0.8. In addition, the dirt determining unit 12 may determine that dirt is attached when the reflection intensity of the point group to be determined after the second time becomes 80% or less of the reference value.

The second predetermined time S2 may be the same as or different from the first predetermined time S1. Note that since an object exhibiting a stable reflection intensity over the first predetermined time S1 is expected to exhibit a similar reflection intensity over the subsequent second predetermined time S2, the second predetermined time is preferably shorter than the first predetermined time.

The dirt determination described above will be described in detail with reference to FIG. 7. FIG. 7 is a diagram showing transition of a reflection intensity at a certain point a3 on the guide board. In FIG. 7, the vertical axis represents the reflection intensity, and the horizontal axis represents the time. From a time point s0 to a time point s1, the reflection intensity is A0. Thereafter, from the time point s1 to a time point s2, a bird crossed between the light receiving unit and the signboard, so the reflection intensity was reduced to A1. Thereafter, the reflection intensity recovered to A0 from the time point s2 to a time point s3. In addition, after the time point s3, a state in which the dirt was attached to the outer lens 32 and the reflection intensity was reduced to A2 continued.

In this case, the dirt determining unit 12 determines that the variation in the reflection intensity from the time point s1 to a time point s4 after the first predetermined time S1 is equal to or less than a predetermined value and this point is one of the point groups to be determined. Note that, although the reflection intensity is lowered by the bird from the time point s1 to the time point s4 (between the time point s1 and the time point s2), since it is determined that the variation in the reflection intensity from the time point s1 to the time point s4 is sufficiently small, this point is determined as a point group to be determined.

The state in which the reflection intensity was reduced to A2 continues from the time point s3 to a time point s5 after the second predetermined time S2 has elapsed from the time point s4. When an average value Aavr of the reflection intensity during the second predetermined time S2 from the time point s4 falls below 80% of the maximum reflection intensity A0 within the first predetermined time S1, the dirt determining unit 12 determines the dirt is attached to the position of the outer lens 32 corresponding to the point a3.

In this way, even when the landscape within the detection range changes due to movement or the like of a vehicle, a pedestrian, a bird or the like, the sensor system 10 according to the third example can also determine attachment of dirt by using the reflection intensity of the target showing the stable reflection intensity over a certain time. The target showing stable reflection intensity over a certain time includes a road surface, the sky, a guide board, and the like. All kinds of targets can be used to determine attachment of dirt, and there is no need to determine attachment of dirt only to a specific target.

Note that it is obvious that the third example can also be applied to a sensor system in which the LiDAR is mounted on a vehicle. For example, a road surface or the like appears as an area showing stable reflection intensity in a certain fixed area within the detection range even when the vehicle is traveling. For this reason, the sensor system of the third example mounted on the vehicle can perform determination of dirt attachment by using the road surface.

<Fourth example>

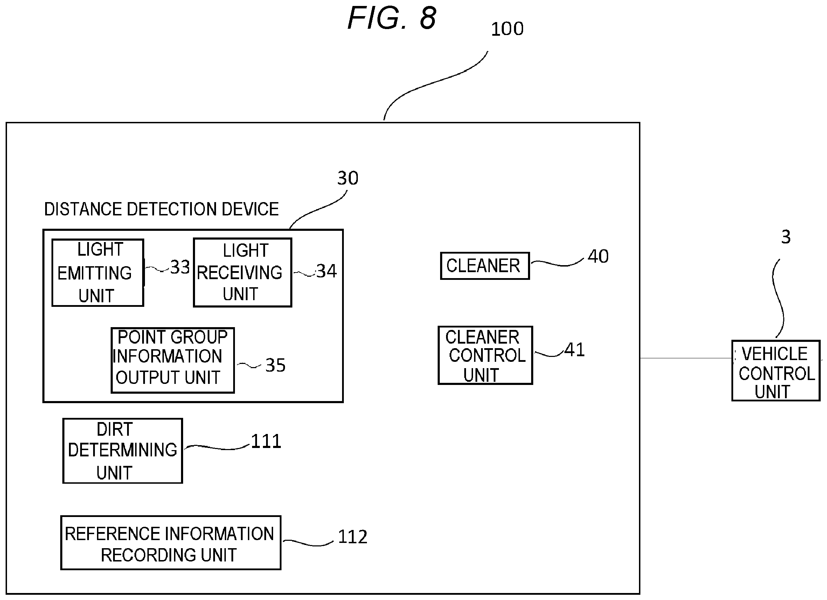

Next, a sensor system 100 according to a fourth example not belonging to the invention will be described with reference to FIGS. 8 to 11. FIG. 8 is a system block diagram of a sensor system 100 according to a fourth example. The sensor system 100 of the fourth example is mounted on a vehicle having a vehicle control unit 3. As shown in FIG. 8, the sensor system 100 includes a LiDAR 30 (an example of the sensor), a dirt determining unit 111, and a reference information recording unit 112. The LiDAR 30 is a sensor that can acquire external information.

As shown in FIG. 2, the LiDAR 30 includes a housing 31 having an opening and an outer lens 32 (an example of the transmissive part) covering the opening of the housing 31. In a space formed by the housing 31 and the outer lens 32, a light emitting unit 33 and a light receiving unit 34 are provided. The light receiving unit 34 detects light emitted from the light emitting unit 33 and reflected by a detection target. At this time, the light receiving unit 34 receives reflected light from the detection target via the outer lens 32 (an example of the transmissive part). The light receiving unit 34 outputs detection information corresponding to the detected light.

The light emitting unit 33 emits light within a detection range defined ahead of the LiDAR 30. The light emitting unit 33 sequentially emits light toward a plurality of points within the detection area. Light emitted from the light emitting unit 33 and reflected by an object within the detection area passes through the outer lens 32 and is incident onto the light receiving unit 34. The light receiving unit 34 outputs a detection result corresponding to the detection of the reflected light to the point group information output unit.

The point group information output unit 35 (refer to FIG. 8) outputs point group information including position information and distance information with respect to a plurality of points within the detection area.

The position information is information indicating at which point (called a detection point) in the detection area the light emitted from the light emitting unit 33 and reflected toward the light receiving unit 34 was reflected, i.e., a position of the detection point.

For example, it is assumed that the detection area is previously divided into a matrix shape of 10000× 10000, or the like, the light emitting unit 33 is configured to emit light to points within the divided areas, and the light emitting unit 33 is configured to emit sequentially light from a point located on the right upper side of the plurality of points toward a point located on the left lower side. In this case, the order in which the light was received includes position information about which point the light was emitted toward. In this case, the point group information output unit 35 outputs the distance information in order, and the order of outputting the information becomes position information.

Alternatively, a configuration may be possible in which the light emitting unit 33 includes a light source and a mirror capable of changing a direction, and a direction in which the light emitting unit 33 emits light can be specified by a direction of the mirror. In this case, a direction in which the light reflected by the mirror travels becomes position information. The position information in this case can express the direction in which the light travels by a horizontal angle and a vertical angle. The point group information output unit 35 outputs point group information consisting of position information on a detection point based on a direction of the mirror of the light emitting unit 33, and distance information.

The distance information is information indicating a distance between the light receiving unit 34 and an object present at the detection point. The distance information is calculated based on a light flux and a time or phase after the light emitting unit 33 emits light toward the detection point until the light receiving unit 34 receives reflected light from the detection point.

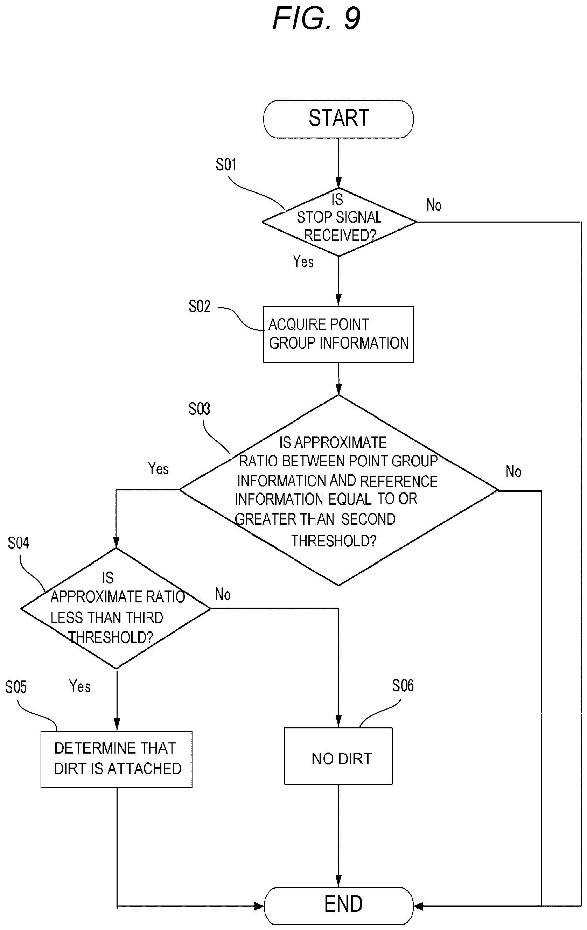

The dirt determining unit 111 detects dirt attached to the outer lens 32, based on the point group information including the position information and the distance information. A dirt determination method by the dirt determining unit 111 will be described with reference to FIGS. 9 to 11.

FIG. 9 is a flow chart of dirt attachment determination that is performed by the sensor system 100. As shown in FIG. 9, first, the dirt determining unit 111 determines whether a stop signal, which indicates that the vehicle is stopped, is acquired from the vehicle control unit 3 (step S01).

Note that this flow chart may be configured to be started when a power supply of the vehicle is turned off.

Alternatively, this flow chart may be configured to be started when a shift lever of the vehicle enters the parking range, when the parking brake is pulled, when the vehicle speed stays at zero for a predetermined time or longer, when a user operates a switch for starting the dirt attachment determination, or the like.

When the stop signal is not acquired (step S01: No), the dirt determining unit 111 ends the processing. When the stop signal is acquired (step S01: Yes), the dirt determining unit 111 acquires the point group information from the point group information output unit 35 (step S02).

Next, the dirt determining unit 111 reads out reference information from the reference information recording unit 112, and compares the acquired point group information (hereinafter, referred to as stop time point group information) with the reference information (step S03). The reference information is point group information that is used as a reference when the dirt determining unit 111 determines attachment of dirt.

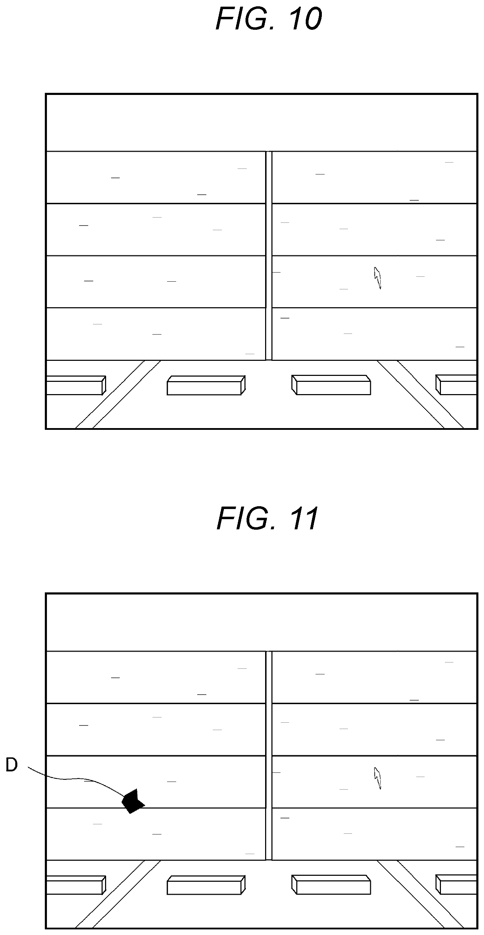

FIG. 10 shows a landscape within the detection range of the LiDAR 30 when acquiring the reference information. FIG. 10 is a landscape within the detection range of the LiDAR 30 when a vehicle equipped with the sensor system 100 of the fourth example is parked in a user's parking lot. In the fourth example, the LiDAR 30 sets the rear of the vehicle as a detection target. For example, the point group information that is output from the point group information output unit 35 in a state in which a vehicle with the clean outer lens 32 is parked in a user's parking lot is the reference information. That is, the information obtained by capturing the landscape shown in FIG. 10 with the LiDAR 30 becomes the reference information. For example, when the user performs a specific operation, such as pressing a specific switch, at an arbitrary timing while the vehicle is parked at a specific location, the point group information acquired at that location is recorded in the reference information recording unit 112.

Note that the reference information is preferably acquired from a location where the user frequently parks the vehicle, such as a parking lot or garage at the user's home, a parking lot or garage at the user's place of work, or a parking lot at a store that the user frequently visits.

Returning to step S03 of FIG. 9, it is assumed that the vehicle is parked in the user's parking lot as shown in FIG. 11. FIG. 11 shows a landscape within the detection range of the LiDAR 30 when performing determination of dirt. In FIG. 9, the dirt determining unit 111 compares the stop time point group information acquired when the vehicle is stopped with the reference information, and determines whether the location where the vehicle is currently stopped coincides with the location where the reference information has been acquired.

Specifically, the dirt determining unit 111 compares distance information each other in which the position information relating to the stop time point group information and the position information relating to the reference information coincide. At this time, if the location where the vehicle is stopped coincides with the location where the reference information has been acquired, both the distance information will be approximate. Therefore, in step S03, it is determined whether a ratio (hereinafter, referred to as approximate ratio) of the number of point group information in which a difference between the distance information relating to the stop time point group information and the distance information relating to the reference information is less than a first threshold to the total number of point group information is equal to or greater than a second threshold. The first threshold is a numerical value of 70% or greater, and the second threshold is a numerical value of 70% or greater and less than 100%.

For example, the number of point group information in which the difference between both the distance information for a certain position is less than 10% (an example of the first threshold) of the distance information relating to the reference information is counted. If the approximate ratio of the counted number of point group information to the number of all point group information within the detection range is 90% (an example of the second threshold) or greater, Yes is determined in step S03.

In step S03, if the approximate ratio is less than the second threshold (for example, less than 90%) (step S03: No), it is estimated that the location where the vehicle is currently stopped is different from the location where the reference information has been acquired. Therefore, the dirt determining unit 111 ends the processing without performing the determination of dirt attachment.

On the other hand, in step S03, if the approximate ratio is equal to or greater than the second threshold (step S03: Yes), it is estimated that the location where the vehicle is currently stopped is the same as the location where the reference information has been acquired. Therefore, the dirt determining unit 111 performs the determination of dirt attachment by using the reference information and the stop time point group information.

Specifically, the dirt determining unit 111 determines that dirt is attached to the outer lens 32 when the approximate ratio is equal to or greater than the second threshold and less than a third threshold (step S04). Note that the third threshold is a numerical value greater than the second threshold and less than 100%.

When no dirt is attached to the outer lens 32, a degree of coincidence between the stop time point group information and the reference information will be considerably high because the vehicle is positioned at the location where the reference information has been acquired. Therefore, if the approximate ratio is 97% (an example of the third threshold) or greater (step S04: No), the dirt determining unit 111 determines that there is no dirt (step S06), and ends the processing. Alternatively, the dirt determining unit 111 may be configured to determine that there is no dirt and to output a dirt-free signal to the vehicle control unit 3.

On the other hand, as shown in FIG. 11, when the dirt D is attached to the outer lens 32, since the light emitted from the light emitting unit is reflected by the dirt D attached to the outer lens 32 positioned nearby, the distance information at the corresponding position becomes extremely small. For this reason, while the distance information relating to the stop time point group information and the distance information relating to the reference information coincide in most areas where the dirt D is not attached, the distance information relating to the stop time point group information and the distance information relating to the reference information do not coincide in the area where the dirt D is attached, and therefore, the approximate ratio is high but the value is not close to 100%.

Therefore, in the fourth example, in step S04, if the approximate ratio is 90% or greater and less than 98% (the second threshold or greater and less than the third threshold) (step S04: Yes), it is determined that dirt is attached to the outer lens 32 (step S05). The dirt determining unit 111 may be configured to output a signal indicating the attachment of dirt to the vehicle control unit 3 or the cleaner control unit. In the present example, the second threshold is set to 90% and the third threshold is set to 98%, but these numerical values are arbitrary. Note that it is explained here as the approximate ratio that is closer to 1 as both are more approximate.

In this way, according to the sensor system 100 of the fourth example, the point group information serving as a reference for dirt determination is recorded as the reference information, and the reference information is compared with the point group information at the current position when the vehicle is stopped, so that even in a state where the vehicle is not traveling, the attachment of dirt to the outer lens 32 can be detected when the vehicle is stopped.

Note that, more precisely, it cannot be said that the vehicle is always parked exactly in the same location and in the same direction. For this reason, in steps S03 and S04, the dirt determining unit 111 may include, as the reference information, information on which correction has been made when the vehicle has been parallelly moved in the left and right and front and rear directions, or information on which correction has been made when the direction of the vehicle has been changed within a range of ±5 degrees.

In addition, as shown in FIG. 10, in a case in which parking spaces for other vehicles are continuously provided on the left and right of the parking space of the host vehicle, the point group information acquired in all cases where another vehicle is parked only on the left of the host vehicle, where another vehicle is parked only on the right of the host vehicle, where other vehicles are parked on both the left and right of the host vehicle, and where another vehicle is not parked on both the left and right of the host vehicle is preferably acquired as the reference information. In the example shown in FIG. 10, a shape and position of a wall, a position and size of irregularities on the wall, a size and shape of a car stop, a position and length of a white line, and the like are preferably included in the reference information.

Alternatively, when acquiring the reference information at a user's garage, there is a high possibility that an object with a side of 1.5 m or shorter, such as a broom or a bicycle, will move frequently. Therefore, point group information forming these objects is not preferably included in the reference information. Conversely, point group information forming a wall or crossbeam of a garage, a scar formed on a wall and the like is preferably used as the reference information.

In addition, a configuration may be possible in which it is determined using a GPS signal that a location where the reference information has been acquired coincides with a location where the vehicle is currently stopped.

Further, in the fourth example, the attachment of dirt is determined depending on whether the approximate ratio, which is a ratio of the number of point group information in which the difference between the distance information relating to the stop time point group information and the distance information relating to the reference information is equal to or less than the first threshold to the total number of point group information is equal to or greater than the second threshold and less than the third threshold, but the present disclosure is not limited thereto.

For example, (1) when the approximate ratio, which is a ratio of the number of point group information in which the difference between the distance information relating to the stop time point group information and the distance information relating to the reference information is less than the first threshold to the total number of point group information is equal to or greater than the second threshold, and (2) when a difference from the distance information relating to the reference information is equal to or greater than a fourth threshold exceeding the first threshold for the distance information relating to the stop time point group information whose difference from the distance information relating to the reference information is equal to or greater than the first threshold, it may be configured to determine that dirt is attached to a portion of the outer lens 32 corresponding to that area.

Specifically, (1) when the approximate ratio is 90% or greater, it is estimated that the vehicle is at the location where the reference information has been acquired.

In addition, (2) when the stop time point group information that is not approximate to the reference information differs greatly from the reference information, it may be determined that dirt is attached to this area. That is, when dirt is attached to the outer lens 32, the detection light is reflected by the dirt immediately adjacent to the light emitting unit, so that the distance information is extremely smaller, as compared with a case in which the detection light is reflected on a road surface or the like.

Therefore, for the distance information relating to the stop time point group information that is not approximate to the reference information whose difference from the distance information relating to the reference information is 10% (the first threshold) or greater, it can be determined that dirt is attached to a portion of the outer lens 32 corresponding to an area whose difference from the distance information relating to the reference information is 70% (an example of the fourth threshold) or greater. The fourth threshold is preferably twice or greater, and more preferably three times or greater the first threshold.

In addition, in the fourth example, the example in which the present disclosure is applied to the LiDAR 30 that acquires the information on the rear of the vehicle has been described, but the present disclosure is not limited thereto. For example, the present disclosure may also be applied to the LiDAR 30 that acquires information on the front side of the vehicle, the LiDAR 30 that acquires information on the side of the vehicle, and the like. In addition, the present disclosure may also be applied to the LiDAR 30 that acquires information on the entire circumference of the vehicle.

In addition, the sensor system 100 includes the cleaner 40 that cleans the LiDAR 30. The cleaner 40 ejects the cleaning liquid onto the outer lens 32 to remove dirt such as mud and dust attached to the outer lens 32. As the cleaning liquid, water, water including a cleaning component, or the like can be used.

Further, in the sensor system 100 of the fourth example, the cleaner control unit 41 is preferably configured to allow actuation of the cleaner 40 when a signal, which indicates that the vehicle is stopped, is acquired from the vehicle control unit 3. While the cleaner 40 is actuated to eject the cleaning liquid, the LiDAR 30 cannot perform normal detection. For this reason, it is preferable to actuate the cleaner 40 while the vehicle is stopped. In addition, since the traveling wind does not act while the vehicle is stopped, the cleaning liquid is likely to remain on the outer lens 32. However, according to the sensor system 100 of the fourth example, the cleaner 40 is not actuated for a predetermined time during which the cleaning liquid remains, so the wasteful consumption of the cleaning liquid can be suppressed.

Although the embodiment of the present disclosure has been described, it is obvious that the technical scope of the present disclosure should not be construed as being limited by the description of the present embodiment. Instead, the scope of the invention is defined by the claims.

**Claims**

1. A sensor system (1) comprising:

   a sensor (30) having a light receiving unit configured to receive light from a detection target via a transmissive part;

   a cleaner (40) capable of cleaning the transmissive part;
   a cleaner control (25) unit configured to control the cleaner (40), and
   a weather information acquiring unit (27) configured to output weather information,
   wherein the cleaner control unit (25) is configured not to actuate the cleaner (40) within a predetermined time after drive of the cleaner (40) is complete,
   **characterized in that**
   the weather information comprises at least one of temperature, humidity, or air pressure,
   and the sensor system (1) further comprises a predetermined time determining unit (28) configured to determine the predetermined time based on the weather information.

2. The sensor system (1) according to Claim 1, further comprising:
   a dirt determining unit (26) configured to determine whether dirt is attached to the transmissive part, based on detection information of the sensor (30), wherein the cleaner control unit (25) is configured not to input the detection information of the sensor (30) to the dirt determining unit (26) within the predetermined time after the drive of the cleaner (40) is complete.

3. The sensor system (1) according to Claim 1, further comprising:
   a dirt determining unit (26) configured to determine whether dirt is attached to the transmissive part, based on detection information of the sensor (30), wherein the cleaner control unit (25) is configured not to allow the dirt determining unit (26) to perform determination of dirt within the predetermined time after the drive of the cleaner (40) is complete.

4. The sensor system (1) according to Claim 1, further comprising:
   a dirt determining unit (26) configured to determine whether dirt is attached to the transmissive part, based on detection information of the sensor (30), wherein the cleaner control unit (25) is configured not to allow the dirt determining unit (26) to output a result of determination of dirt within the predetermined time after the drive of the cleaner (40) is complete.

5. The sensor system (1) according to Claim 1, further comprising:
   a dirt determining unit (26) configured to determine whether dirt is attached to the transmissive part, based on detection information of the sensor (30),

   wherein the cleaner control unit (25) is configured to actuate the cleaner (40) based on an output of the dirt determining unit (26), and wherein the cleaner control unit (25) is configured not to actuate the cleaner (40) regardless of an output of the dirt determining unit (26) within the predetermined time after the drive of the cleaner (40) is complete.

6. The sensor system (1) according to Claim 1, wherein the predetermined time determining unit (28) is configured to further Z determine the predetermined time according to a latitude of a current position.

7. The sensor system (1) according to Claim 1, wherein the sensor system (1) is mounted on a vehicle, and wherein the predetermined time determining unit (28) is configured to further determine the predetermined time according to a traveling speed of the vehicle acquired from the vehicle.

8. The sensor system (1) according to Claim 1, wherein the sensor system (1) is mounted on a vehicle having a vehicle control unit (3), and wherein the cleaner control unit (25) is configured to permit actuation of the cleaner (40) when a signal, which indicates that the vehicle is stopped, is acquired from the vehicle control unit (3).

**Patentansprüche**

1. Ein Sensorsystem (1), aufweisend:

einen Sensor (30) mit einer Lichtempfangseinheit, die so konfiguriert ist, dass sie Licht von einem Erkennungsziel über einen durchlässigen Teil empfängt;

ein Reiniger (40), die in der Lage ist, den durchlässigen Teil zu reinigen;

eine Reinigungssteuerungseinheit (25), die so konfiguriert ist, dass sie den Reiniger (40) steuert, und

eine Wetterinformationserfassungseinheit (27), die so konfiguriert ist, dass sie Wetterinformationen ausgibt,

wobei die Reinigungssteuerungseinheit (25) so konfiguriert ist, dass sie den Reiniger (40) innerhalb einer vorbestimmten Zeit nach Beendigung des Antriebs des Reinigers (40) nicht betätigt, **dadurch gekennzeichnet, dass**

die Wetterinformation mindestens eine der folgenden Größen aufweist: Temperatur, Luftfeuchtigkeit oder Luftdruck, und das Sensorsystem (1) ferner eine Bestimmungsvorrichtung (28) für die vorbestimmte Zeit aufweist, die so konfiguriert ist, dass sie die vorbestimmte Zeit auf der Basis der Wetterinformation bestimmt.

2. Das Sensorsystem (1) gemäß Anspruch 1, das ferner aufweist:

eine Schmutzbestimmungseinheit (26), die so konfiguriert ist, dass sie auf Basis von Erfassungsinformationen des Sensors (30) bestimmt, ob Schmutz an dem durchlässigen Teil haftet,

wobei die Reinigungssteuerungseinheit (25) so konfiguriert ist, dass sie die Erfassungsinformationen des Sensors (30) nicht innerhalb der vorbestimmten Zeit nach Beendigung des Antriebs des Reinigers (40) in die Schmutzbestimmungseinheit (26) eingibt.

3. Das Sensorsystem (1) gemäß Anspruch 1, das außerdem Folgendes aufweist:

eine Schmutzbestimmungseinheit (26), die so konfiguriert ist, dass sie auf der Basis von Erfassungsinformationen des Sensors (30) bestimmt, ob Schmutz an dem durchlässigen Teil haftet,

wobei die Reinigungssteuerungseinheit (25) so konfiguriert ist, dass sie der Schmutzbestimmungseinheit (26) nicht erlaubt, innerhalb einer vorbestimmten Zeit nach Beendigung des Betriebs des Reinigers (40) eine Schmutzbestimmung durchzuführen.

4. Das Sensorsystem (1) gemäß Anspruch 1, das außerdem Folgendes aufweist:

eine Schmutzbestimmungseinheit (26), die so konfiguriert ist, dass sie auf der Basis von Erfassungsinformationen des Sensors (30) bestimmt, ob Schmutz an dem durchlässigen Teil haftet,

wobei die Reinigungssteuereinheit (25) so konfiguriert ist, dass sie es der Schmutzbestimmungseinheit (26) nicht erlaubt, innerhalb einer vorbestimmten Zeit nach Beendigung des Betriebs des Reinigers (40) ein Ergebnis der Schmutzbestimmung auszugeben.

5. Das Sensorsystem (1) gemäß Anspruch 1, das ferner aufweist:

eine Schmutzbestimmungseinheit (26), die so konfiguriert ist, dass sie auf der Basis von Erfassungsinformationen des Sensors (30) bestimmt, ob Schmutz an dem durchlässigen Teil haftet,

wobei die Reinigungssteuerungseinheit (25) so konfiguriert ist, dass sie den Reiniger (40) auf der Basis einer Ausgabe der Schmutzbestimmungseinheit (26) betätigt, und

wobei die Reinigungssteuerungseinheit (25) so konfiguriert ist, dass sie den Reiniger (40) unabhängig von einer Ausgabe der Schmutzbestimmungseinheit (26) innerhalb der vorbestimmten Zeit nach Beendigung des Betriebs des Reinigers (40) nicht betätigt.

**6.** Das Sensorsystem (1) gemäß Anspruch 1, wobei die Bestimmungsvorrichtung (28) für die vorbestimmte Zeit so konfiguriert ist, dass sie die vorbestimmte Zeit zusätzlich entsprechend dem Breitengrad einer aktuellen Position bestimmt.

**7.** Das Sensorsystem (1) gemäß Anspruch 1, wobei das Sensorsystem (1) an einem Fahrzeug angebracht ist, und wobei die Bestimmungsvorrichtung (28) für die vorbestimmte Zeit so konfiguriert ist, dass sie die Vorbestimmungszeit zusätzlich entsprechend einer von dem Fahrzeug erfassten Fahrgeschwindigkeit des Fahrzeugs bestimmt.

**8.** Das Sensorsystem (1) gemäß Anspruch 1, wobei das Sensorsystem (1) an einem Fahrzeug mit einer Fahrzeugsteuereinheit (3) angebracht ist und wobei die Reinigungssteuereinheit (25) so konfiguriert ist, dass sie die Betätigung des Reinigers (40) zulässt, wenn ein Signal, das anzeigt, dass das Fahrzeug am Anschlag ist, von der Fahrzeugsteuereinheit (3) erfasst wird.

**Revendications**

**1.** Système de capteur (1) comprenant :

un capteur (30) comportant une unité de réception de lumière configurée pour recevoir la lumière provenant d'une cible de détection via une partie transmissive ;
un nettoyeur (40) capable de nettoyer la partie transmissive ;
une unité de commande de nettoyeur (25) configurée pour commander le nettoyeur (40), et
une unité d'acquisition d'informations météorologiques (27) configurée pour délivrer en sortie des informations météorologiques,
dans lequel l'unité de commande de nettoyeur (25) est configurée pour ne pas actionner le nettoyeur (40) pendant un temps prédéterminé après la fin de l'entraînement du nettoyeur (40), **caractérisé en ce que**
les informations météorologiques comprennent au moins l'une parmi la température, l'humidité ou la pression atmosphérique, et
le système de capteur (1) comprend en outre une unité de détermination de temps prédéterminé (28) configurée pour déterminer le temps prédéterminé sur la base des informations météorologiques.

**2.** Système de capteur (1) selon la revendication 1, comprenant en outre :

une unité de détermination de saleté (26) configurée pour déterminer si de la saleté est fixée à la partie transmissive, sur la base des informations de détection du capteur (30),
dans lequel l'unité de commande de nettoyeur (25) est configurée pour ne pas entrer les informations de détection du capteur (30) dans l'unité de détermination de saleté (26) dans le temps prédéterminé après la fin de l'entraînement du nettoyeur (40).

**3.** Système de capteur (1) selon la revendication 1, comprenant en outre :

une unité de détermination de saleté (26) configurée pour déterminer si de la saleté est fixée à la partie transmissive, sur la base des informations de détection du capteur (30),
dans lequel l'unité de commande de nettoyeur (25) est configurée pour ne pas permettre à l'unité de détermination de saleté (26) d'effectuer la détermination de saleté dans le temps prédéterminé après la fin de l'entraînement du nettoyeur (40).

**4.** Système de capteur (1) selon la revendication 1, comprenant en outre :

une unité de détermination de saleté (26) configurée pour déterminer si de la saleté est fixée à la partie transmissive, sur la base des informations de détection du capteur (30),
dans lequel l'unité de commande de nettoyeur (25) est configurée pour ne pas permettre à l'unité de détermination de saleté (26) de délivrer en sortie un résultat de détermination de saleté dans le temps prédéterminé après la fin de l'entraînement du nettoyeur (40).

**5.** Système de capteur (1) selon la revendication 1, comprenant en outre :

une unité de détermination de saleté (26) configurée pour déterminer si de la saleté est fixée à la partie transmissive, sur la base des informations de détection du capteur (30),
dans lequel l'unité de commande de nettoyeur (25) est configurée pour actionner le nettoyeur (40) sur la base d'une sortie de l'unité de détermination de saleté (26), et
dans lequel l'unité de commande de nettoyeur (25) est configurée pour ne pas actionner le nettoyeur (40) quelle que soit la sortie de l'unité de détermination de saleté (26) dans le temps prédéterminé après la fin de l'entraînement du nettoyeur (40).

6. Système de capteur (1) selon la revendication 1, dans lequel
l'unité de détermination de temps prédéterminé (28) est configurée pour déterminer en outre le temps prédéterminé en fonction de la latitude d'une position actuelle.

7. Système de capteur (1) selon la revendication 1, dans lequel le système de capteur (1) est monté sur un véhicule, et
dans lequel l'unité de détermination de temps prédéterminé (28) est configurée pour déterminer en outre le temps prédéterminé en fonction d'une vitesse de déplacement du véhicule acquise à partir du véhicule.

8. Système de capteur (1) selon la revendication 1, dans lequel le système de capteur (1) est monté sur un véhicule ayant une unité de commande de véhicule (3), et
dans lequel l'unité de commande de nettoyeur (25) est configurée pour permettre l'actionnement du nettoyeur (40) lorsqu'un signal, qui indique que le véhicule est à l'arrêt, est acquis à partir de l'unité de commande de véhicule (3).

*FIG. 1*

# FIG. 2

**FIG. 3**

## FIG. 4

## FIG. 5

## FIG. 6

FIG. 7

# FIG. 8

DISTANCE DETECTION DEVICE 30

LIGHT EMITTING UNIT 33

LIGHT RECEIVING UNIT 34

POINT GROUP INFORMATION OUTPUT UNIT 35

DIRT DETERMINING UNIT 111

REFERENCE INFORMATION RECORDING UNIT 112

CLEANER 40

CLEANER CONTROL UNIT 41

VEHICLE CONTROL UNIT 3

100

# FIG. 9

```
                    ┌─────────────┐
                    │    START    │
                    └─────────────┘
                           │
                           ▼
S01               ◇ IS STOP SIGNAL ◇ ──No──┐
                  ◇   RECEIVED?    ◇        │
                           │                │
                          Yes               │
                           ▼                │
S02        ┌─────────────────────┐          │
           │ ACQUIRE POINT       │          │
           │ GROUP INFORMATION   │          │
           └─────────────────────┘          │
                           │                │
                           ▼                │
S03       ◇ IS APPROXIMATE RATIO ◇          │
   Yes ◇ BETWEEN POINT GROUP         ◇ ─No─┤
       ◇ INFORMATION AND REFERENCE   ◇     │
       ◇ INFORMATION EQUAL TO OR     ◇     │
       ◇ GREATER THAN SECOND         ◇     │
       ◇ THRESHOLD?                  ◇     │
           │                                │
           ▼                                │
S04  ◇ IS APPROXIMATE ◇ ─No─┐               │
     ◇ RATIO LESS THAN ◇    │               │
     ◇ THIRD THRESHOLD? ◇   │               │
           │                │               │
          Yes               │               │
           ▼                ▼               │
S05 ┌──────────────┐   S06 ┌──────────┐     │
    │ DETERMINE THAT│      │ NO DIRT  │     │
    │ DIRT IS       │      └──────────┘     │
    │ ATTACHED      │           │           │
    └──────────────┘           │           │
           │                   ▼           │
           └──────────────► ┌──────┐ ◄─────┘
                            │ END  │
                            └──────┘
```

## FIG. 10

## FIG. 11

D

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001171491 A
- US 20200207312 A1
- WO 2020162085 A1
- WO 2019172306 A1